(19) Europäisches Patentamt
European Patent Office
Office européen des brevets

(11) EP 2 537 898 B1

(12) **EUROPEAN PATENT SPECIFICATION**

(45) Date of publication and mention of the grant of the patent:
**21.12.2016 Bulletin 2016/51**

(21) Application number: **11744780.5**

(22) Date of filing: **14.02.2011**

(51) Int Cl.:
***C08L 69/00*** *(2006.01)* ***C08K 3/24*** *(2006.01)*
***C08K 5/357*** *(2006.01)*

(86) International application number:
**PCT/JP2011/053581**

(87) International publication number:
**WO 2011/102494 (25.08.2011 Gazette 2011/34)**

(54) **POLYCARBONATE RESIN COMPOSITION AND MOLDED ARTICLE COMPRISING SAME**

POLYCARBONATHARZZUSAMMENSETZUNG UND FORMARTIKEL DAMIT

COMPOSITION DE RÉSINE POLYCARBONATE ET ARTICLE MOULÉ LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2010 JP 2010031155**

(43) Date of publication of application:
**26.12.2012 Bulletin 2012/52**

(73) Proprietor: **Teijin Chemicals, Ltd.**
**Chiyoda-ku**
**Tokyo 100-0013 (JP)**

(72) Inventors:
- **TOGASHI Fumihiro**
  **Tokyo 100-0013 (JP)**
- **KOGA Takashi**
  **Tokyo 100-0013 (JP)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
**WO-A1-2009/123271**
**WO-A1-2009/123271**
**WO-A1-2010/143732**
**JP-A- 2004 137 472**
**JP-A- 2008 150 548**
**JP-A- 2008 214 596**
**US-A1- 2005 215 750**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 537 898 B1

## Description

### TECHNICAL FIELD

The present invention relates to a polycarbonate resin composition which comprises an inorganic material having infrared shielding performance and a molded article thereof.

### BACKGROUND ART

Since we feel heat when light having the wavelength of an infrared region is applied to our skins, it is necessary to block most of light having an infrared wavelength region by means of a window member for automobiles or a window member for construction. At the same time, it is desired that the window member should transmit the wavelength of a visible region as much as possible to secure the field of view. That is, a highly light-transmissive window member which lowers the sensory temperature and reduces the energy consumption of an air conditioner can be manufactured by using a material which blocks infrared light and transmits visible light. Further, due to progress made in energy saving and space saving by technical improvement from the viewpoint of environmental concerns, infrared shielding materials in various forms are desired and thick resin sheets and resin molded articles having the ability of shielding a specific wavelength region are very useful.

Patent Document 1 discloses a resin composition which comprises an organic infrared shielding material. However, since the organic infrared shielding material is thermally unstable, it is difficult to mold it at a molding temperature range which is commonly used for polycarbonates. Although a resin composition comprising an inorganic infrared shielding material such as ATO or ITO as disclosed by Patent Document 2 is known, there readily occurs a problem that cloudiness becomes high. The further improvement of light shielding performance in the near-infrared to mid-infrared wavelength region where we feel a high sensory temperature when insolation reaches the ground is required for the infrared shielding material. To improve this, a tungsten-based inorganic additive as disclosed by Patent Document 3 is now under study. Most of highly transparent tungsten-based, lanthanum hexaboride-based and organic infrared shielding materials which comprise a polycarbonate resin as a base material assume a yellowish-green color.

(Patent Document 1) Japanese Patent No. 2779288
(Patent Document 2) JP-A 2009-505871
(Patent Document 3) Japanese Patent No. 4182357

### DISCLOSURE OF THE INVENTION

It is therefore an object of the present invention to provide a polycarbonate resin composition which has high light transmission performance in the visible light region and excellent infrared shielding properties and resistance to molding heat, can contribute to the reduction of an environmental burden and has such high designability that it can be tinted in various colors as well as a molded article thereof.

The inventors of the present invention conducted intensive studies to attain the above object and found that when a polycarbonate resin and a specific inorganic infrared shielding material are used in combination and a specific ultraviolet absorbent is added, a polycarbonate resin composition which exhibits high infrared shielding performance and high transmission performance in the visible light region and can contribute to the reduction of an environmental burden can be obtained.

That is, the above object can be attained by the following invention.

1. A resin composition comprising:

   (A) 100 parts by weight of a polycarbonate resin (component A);
   (B) 0.001 to 0.1 part by weight of an inorganic infrared shielding material (component B); and
   (C) 0.01 to 1 part by weight of an ultraviolet absorbent represented by the following formula (1) (component C);

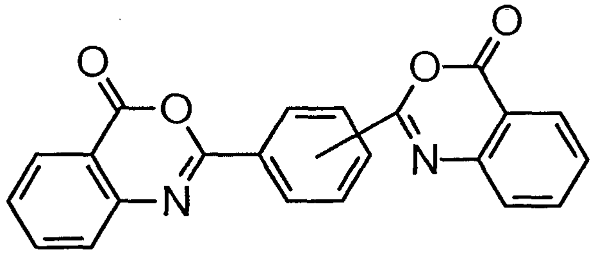

(1)

the component B is a composite tungsten oxide particle represented by the formula MxWyOz (M is an element selected from H, He, alkali metal, alkali earth metal, rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, and x, y and z are numerals which satisfy $0.01 \leqq x \leqq 1$, $0.001 \leqq x/y \leqq 1$, and $2.2 \leqq z/y \leqq 3.0$); and wherein the particle diameter of the component B is 1 to 800 nm. The composite tungsten oxide particle thus defined will hereinafter be referred to as "composite tungsten oxide fine particle".

2. The resin composition in the above paragraph , wherein M is an element selected from the group consisting of Li, Na, K, Rb, Cs, Mg, Ca, Sr and Ba.
3. The resin composition in the above paragraphs 1 or 2, wherein the composite tungsten oxide particle is coated with a dispersant.
4. The resin composition in any one of the above paragraphs 1 to 3 which comprises a heat stabilizer (component D) in an amount of 0.0001 to 1 part by weight based on 100 parts by weight of the polycarbonate resin (component A).
5. The resin composition in the above paragraph 4, wherein the heat stabilizer (component D) is at least one heat stabilizer selected from the group consisting of a phosphorus-based stabilizer (component D-1), a hindered phenol-based stabilizer (component D-2) and a sulfur-based stabilizer (component D-3).
6. A molded article formed from the resin composition of any one of the above paragraphs 1 to 6.
7. The molded article in the above paragraph 6 which has a visible light transmittance of 40 to 90 % and a Tts (Solar total transmittance) of 70 % or less, which are determined as described below.
8. The molded article in the above paragraph 6 or 7 whose surface is hard coated.
9. The molded article in any one of the above paragraphs 6 to 8 which is a window member for vehicles, a lamp fitting for vehicles or a window member for construction materials.

BEST MODE FOR CARRYING OUT THE INVENTION

Each of the constituent components of the present invention will be described in detail hereinunder.

(component A: polycarbonate resin)

The polycarbonate resin (component A) is obtained by reacting a dihydric phenol with a carbonate precursor. Examples of the reaction include interfacial polycondensation, melt transesterification, the solid-phase transesterification of a carbonate prepolymer and the ring-opening polymerization of a cyclic carbonate compound.

Typical examples of the dihydric phenol used herein include hydroquinone, resorcinol, 4,4'-biphenol, 1,1-bis(4-hydroxyphenyl)ethane, 2,2-bis(4-hydroxyphenyl)propane (commonly known as "bisphenol A"), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis(4-hydroxyphenyl)ester, 2,2-bis(3,5-dibromo-4-hydroxyphenyl)propane, bis(3,5-dibromo-4-hydroxyphenyl)sulfone, bis(4-hydroxy-3-methylphenyl)sulfide, 9,9-bis(4-hydroxyphenyl)fluorene and 9,9-bis(4-hydroxy-3-methylphenyl)fluorene . Out of these, bis (4-hydroxyphenyl) alkanes are preferred, and bisphenol A is particularly preferred from the viewpoint of impact resistance.

As the carbonate precursor is used a carbonyl halide, a diester carbonate or a haloformate, as exemplified by phosgene, diphenyl carbonate and dihaloformates of a dihydric phenol.

For the manufacture of the polycarbonate resin from a dihydric phenol and a carbonate precursor by interfacial polymerization, a catalyst, an end-sealing agent and an antioxidant for preventing the oxidation of the dihydric phenol may be optionally used. The polycarbonate resin includes a branched polycarbonate resin obtained by copolymerizing a polyfunctional aromatic compound having 3 or more aromatic groups, a polyester carbonate resin obtained by copolymerizing an aromatic or aliphatic (including alicyclic) bifunctional carboxylic acid, a copolycarbonate resin obtained by copolymerizing a bifunctional alcohol (including an alicyclic bifunctional alcohol), and a polyester carbonate resin obtained by copolymerizing the bifunctional carboxylic acid and the bifunctional alcohol. It may also be a mixture of two or more of the obtained polycarbonate resins.

1,1,1-tris(4-hydroxyphenyl)ethane or 1,1,1-tris(3,5-dimethyl-4-hydroxyphenyl)ethane may be used as the polyfunctional aromatic compound having 3 or more aromatic groups.

When a polyfunctional compound which forms a branched polycarbonate is contained, the amount of the polyfunctional compound is preferably 0.001 to 1 mol%, more preferably 0.005 to 0.9 mol%, particularly preferably 0.01 to 0.8 mol% based on the total amount of the aromatic polycarbonates. In the case of melt transesterification, a side reaction may produce a branched structure. The amount of the branched structure is also 0.001 to 1 mol%, preferably 0.005 to 0.9 mol%, particularly preferably 0.01 to 0.8 mol% based on the total amount of the aromatic polycarbonates. This amount can be calculated by 1H-NMR measurement.

The aliphatic bifunctional carboxylic acid is preferably $\alpha,\omega$-dicarboxylic acid. Preferred examples of the aliphatic bifunctional carboxylic acid include linear saturated aliphatic dicarboxylic acids such as sebacic acid (decanedioic acid), dodecanedioic acid, tetradecanedioic acid, octadecanedioic acid and icosanedioic acid, and alicyclic dicarboxylic acids such as cyclohexanedicarboxylic acid. The bifunctional alcohol is preferably an alicyclic diol such as cyclohexanedimethanol, cyclohexanediol or tricyclodecarledimethanol.

Further, a polycarbonate-polyorganosiloxane copolymer obtained by copolymerizing a polyorganosiloxane unit may also be used.

The reaction in the interfacial polymerization method is generally a reaction between a dihydric phenol and phosgene in the presence of an acid binder and an organic solvent. Examples of the acid binder include alkali metal hydroxides such as sodium hydroxide and potassium hydroxide, and pyridine.

Examples of the organic solvent include halogenated hydrocarbons such as methylene chloride and chlorobenzene.

A catalyst such as a tertiary amine or a quaternary ammonium salt may be used to promote the reaction. A monofunctional phenol such as phenol, p-tert-butylphenol or p-cumylphenol is preferably used as a molecular weight control agent. Further examples of the monofucntional phenol include decyl phenol, dodecyl phenol, tetradecyl phenol, hexadecyl phenol, octadecyl phenol, eicosyl phenol, docosyl phenol and triacontyl phenol. These monofunctional phenols having a relatively long-chain alkyl group are effective when the improvement of flowability and hydrolysis resistance is required.

The reaction temperature is generally 0 to 40°C, the reaction time is several minutes to 5 hours, and pH during the reaction is preferably kept at 10 or more.

The reaction in the melt method is generally a transesterification reaction between a dihydric phenol and a diester carbonate and carried out by mixing together the dihydric phenol and the diester carbonate in the presence of an inert gas at 120 to 350°C under reduced pressure. The formed phenol is discharged to the outside of the system by changing the degree of pressure reduction stepwise to 133 Pa or less in the end. The reaction time is generally about 1 to 4 hours.

Examples of the diester carbonate include diphenyl carbonate, dinaphthyl carbonate, bis(diphenyl)carbonate, dimethyl carbonate, diethyl carbonate and dibutyl carbonate. Out of these, diphenyl carbonate is particularly preferred.

A polymerization catalyst may be used to accelerate the polymerization rate. Examples of the polymerization catalyst include hydroxides of an alkali metal or an alkali earth metal such as sodium hydroxide and potassium hydroxide, hydroxides of boron and aluminum, alkali metal salts, alkali earth metal salts, quaternary ammonium salts, alkoxides of an alkali metal or an alkali earth metal, organic acid salts of an alkali metal or an alkali earth metal, zinc compounds, boron compounds, silicon compounds, germanium compounds, organic tin compounds, lead compounds, lead compounds, antimony compounds, manganese compounds, titanium compounds and zirconium compounds, all of which are generally used for an esterification reaction and a transesterification reaction. These catalysts may be used alone or in combination of two or more. The amount of the polymerization catalyst is preferably $1 \times 10^{-9}$ to $1 \times 10^{-5}$ equivalent, more preferably $1 \times 10^{-8}$ to $5 \times 10^{-6}$ equivalent based on 1 mol of the dihydric phenol as a raw material.

In order to reduce the amount of the phenolic terminal group in the polymerization reaction, a compound such as 2-chlorophenylphenyl carbonate, 2-methoxycarbonylphenylphenyl carbonate or 2-ethoxycarbonylphenylphenyl carbonate may be added in the latter stage or at the end of the polycondensation reaction.

Further, a deactivator is preferably used to neutralize the activity of the catalyst in the melt transesterification method. The deactivator is preferably used in an amount of 0.5 to 50 mols based on 1 mol of the residual catalyst. The deactivator is used in an amount of preferably 0.01 to 500 ppm, more preferably 0.01 to 300 ppm, particularly preferably 0.01 to 100 ppm based on the aromatic polycarbonate after polymerization. Preferred examples of the deactivator include phosphonium salts such as tetrabutylphosphonium salts of dodecylbenzenesulfonic acid, and ammonium salts such as tetraethylammonium dodecylbenzyl sulfate. Details of the reaction patterns other than the above are well known through documents and patent publications.

The viscosity average molecular weight of the polycarbonate resin is preferably 14,000 to 100,000, more preferably 20,000 to 30,000, much more preferably 22,000 to 28, 000, most preferably 23, 000 to 26, 000. When the molecular weight is lower than the above range, mechanical properties such as impact value become unsatisfactory, whereby cracking readily occurs. When the molecular weight is higher than the above range, injection molding becomes difficult, whereby cracking readily occurs by residual stress. Within the more preferred range, both impact resistance and moldability become excellent. The above polycarbonate resin may be obtained by mixing a polycarbonate resin having a viscosity average molecular weight outside the above range.

The viscosity average molecular weight (M) of the polycarbonate resin is obtained by calculating the specific viscosity ($\eta_{sp}$) of a solution prepared by dissolving 0.7 g of the polycarbonate resin in 100 ml of methylene chloride at 20°C and inserting it into the following equation.

$$\eta_{sp}/c = [\eta] + 0.45 \times [\eta]^2 c$$ ([η] represents an intrinsic viscosity)

$$[\eta] = 1.23 \times 10^{-4} M^{0.83}$$

$$c = 0.7$$

An example of the polycarbonate resin (component A) is given below. That is, an aromatic polycarbonate which consists of an aromatic polycarbonate having a viscosity average molecular weight of 70,000 to 30C, 000 (PC-i) and an aromatic polycarbonate having a viscosity average molecular weight of 10,000 to 30,000 (PC-ii) and which has a viscosity average molecular weight of 15,000 to 40,000, preferably 20, 000 to 30, 000 (to be referred to as "high-molecular weight component-containing aromatic polycarbonate" hereinafter) may also be used.

The high-molecular weight component-containing aromatic polycarbonate improves the entropy elasticity of a polymer due to the existence of PC-i, which is advantageous at the time of preferred injection press molding in the present invention. For example, the number of appearance defects such as hesitation marks can be reduced, thereby making it possible to increase the ranges of injection press molding conditions. On the other hand, the component PC-ii which is a low-molecular weight component reduces the overall melt viscosity, promotes the relaxation of the resin and enables molding with little distortion. The same effect is observed in a polycarbonate resin containing a branched component.

(component B: inorganic infrared shielding material)

The particle diameter of the inorganic infrared shielding material (component B) is 1 to 800 nm, preferably 1 to 600 nm, more preferably 1 to 300 nm. When the particle diameter is smaller than 1 nm, the aggregation effect becomes large, whereby a dispersion failure may occur, and when the particle diameter is larger than 800 nm, the cloudiness of a transparent resin molded article becomes high disadvantageously.

(composite tungsten oxide fine particle)

The composite tungsten oxide fine particle used as the component B in the present invention is represented by MxWyOz (M is an element selected from H, He, alkali metal, alkali earth metal, rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, and x, y and z are numerals which satisfy $0.01 \leqq x \leqq 1$, $0.001 \leqq x/y \leqq 1$, and $2.2 \leqq z/y \leqq 3.0$).

M is preferably an element selected from the group consisting of Li, Na, K, Rb, Cs, Mg, Ca, Sr and Ba, most preferably an element selected from the group consisting of K, Rb and Cs. As for the range of x, $0.01 \leqq x \leqq 0.5$ is preferred, and $0.2 \leqq x \leqq 0.4$ is more preferred. As for the ranges of x/y and z/y, $0.01 \leqq x/y \leqq 0.5$ and $2.7 \leqq z/y \leqq 3.0$ are preferred, and $0.2 \leqq x/y \leqq 0.4$ and $2.8 \leqq z/y \leqq 3.0$ are more preferred.

The composite tungsten oxide fine particle can be obtained by heating a tungsten compound as a starting material in an inert gas atmosphere or a reducing gas atmosphere. The composite tungsten oxide fine particle obtained by this heat treatment has sufficiently high near infrared shielding ability and preferred properties as an infrared shielding fine particle.

The starting material of the composite tungsten oxide fine particle represented by the general formula MxWyOz

is a tungsten compound which contains element M in the form of an elemental substance or a compound. Examples thereof include tungsten trioxide powders, tungsten dioxide powders, tungsten oxide hydrates, tungsten hexachloride powders and ammonium tungstate powders, all of which contain element M in the form of an elemental substance or a compound. A tungsten oxide hydrate powder obtained by dissolving tungsten hexachloride in an alcohol and drying it is also included. Further, a tungsten oxide hydrate powder obtained by dissolving tungsten hexachloride in an alcohol, adding water to precipitate tungsten hexachloride and drying it is further included. A tungsten compound powder obtained by drying an ammonium tungstate aqueous solution and a metal tungsten powder are further included. When the starting material is a solution, each element can be easily mixed uniformly. Therefore, an ammonium tungstate aqueous solution and a tungsten hexachloride solution are more preferably used. The above-described composite tungsten oxide fine particle can be obtained by heating any one of these raw materials in an inert gas atmosphere or a reducing gas atmosphere.

To produce a tungsten compound as a starting material in which all the components are uniformly mixed together in a molecular level, it is preferred that each raw material in a solution state should be mixed and that a tungsten compound containing element M can be dissolved in a solvent such as water or an organic solvent. Examples of the tungsten compound include tungstates, chloride salts, nitrates, sulfates, oxalates, oxides, carbonates and hydroxides containing element M, out of which those able to be prepared in a solution state are preferred

A detailed description is given of the raw materials for the production of the above composite tungsten oxide fine particle again.

As the starting material for obtaining the composite tungsten oxide fine particle represented by the general formula MxWyOz may be used a tungsten trioxide powder, a tungsten dioxide powder, a hydrate of tungsten oxide, a tungsten hexachloride powder, an ammonium tungstate powder or a hydrate powder of tungsten oxide obtained by dissolving tungsten hexachloride in an alcohol and drying it. A hydrate powder of tungsten oxide obtained by dissolving tungsten hexachloride in an alcohol, adding water to precipitate tungsten hexachloride and drying it, a tungsten compound powder obtained by drying an ammonium tungstate aqueous solution, and a mixture of at least one powder selected from metal tungsten powders and a powder of an elemental substance or a compound containing the above element M may be also used.

Further, when a tungsten compound which is a starting material for obtaining the composite tungsten oxide fine particle is a solution or a dispersion, the elements can be easily mixed together uniformly.

From this point of view, more preferably, the starting material of the composite tungsten oxide fine particle is a powder obtained by mixing together a tungsten hexachloride alcohol solution or an ammonium tungstate aqueous solution with a solution of a compound containing the above element M and then drying the mixture.

Similarly, the starting material of the composite tungsten oxide fine particle is also preferably a powder obtained by dissolving tungsten hexachloride in an alcohol, adding water to prepare a dispersion containing a precipitate, mixing the dispersion with a powder of an elemental substance or a compound containing the above element M or a solution of a compound containing the above element M, and drying the mixture.

Examples of the compound containing the above element M include tungstates, chloride salts, nitrates, sulfates, oxalates, oxides, carbonates and hydroxides of the element M. The compound is not limited to these and should be in a solution state. Further, to manufacture the composite tungsten oxide fine particle on an industrial scale, when a tungsten oxide hydrate powder or tungsten trioxide and a carbonate or hydroxide of element M are used in combination, no harmful gas is produced in the stage of a heat treatment advantageously.

As for the heat treatment conditions of the composite tungsten oxide fine particle in an inert atmosphere, the temperature is preferably 650°C or higher. The starting material which is heated at 650°C or higher has high efficiency as an infrared shielding fine particle because it has sufficiently high near-infrared shielding ability. It is recommended to use an inert gas such as Ar or $N_2$. As for the heat treatment conditions in a reducing atmosphere, it is recommended to heat the starting material at 100 to 850°C in a reducing gas atmosphere and then at 650 to 1200°C in an inert gas atmosphere. The reducing gas at this point is not particularly limited but preferably $H_2$. When $H_2$ is used as the reducing gas, as for the composition of the reducing gas, the volume ratio of $H_2$ is preferably 0.1 % or more, more preferably 2 % or more. When the volume ratio of $H_2$ is 0.1 % or more, reduction can be promoted efficiently.

It is preferred from the viewpoint of the improvement of weather resistance that the surface of the infrared shielding material fine particle obtained by the above step should be coated with an oxide containing at least one metal out of Si, Ti, Zr and Al. Although the coating method is not particularly limited, the surface of the infrared shielding material fine particle can be coated by adding an alkoxide of the above metal to a dispersion of the infrared shielding material fine particle.

The composite tungsten oxide fine particle is preferably coated with a dispersant. Examples of the dispersant include polycarbonates, polysulfones, polyacrylonitrile, polyacrylate, polyethylene, polyvinyl chloride, polyvinylidene chloride, fluororesin, polyvinyl butyral, polyvinyl alcohols, polystyrene, silicone-based resins and derivatives thereof. When the composite tungsten oxide fine particle is coated with the dispersant, its dispersibility in a resin is improved at the time of addition and further the deterioration of mechanical properties is prevented. To coat the composite tungsten

oxide fine particle with the dispersant, for example, the composite tungsten oxide fine particle and the dispersant are dissolved in a solvent such as toluene and stirred to prepare a dispersion, and then the solvent is removed by vacuum drying.

To add the component B to the polycarbonate resin, the composite tungsten oxide fine particle or the coated composite tungsten oxide fine particle is added directly or after it is diluted with the polycarbonate resin in a ratio of 1:1 to 1:100.

The content of the component B is 0.001 to 0.1 part by weight, preferably 0.002 to 0.1 part by weight, more preferably 0.01 to 0.07 part by weight based on 100 parts by weight of the component A. When the content of the component B is lower than 0.001 part by weight, infrared shielding ability is not fully exhibited and further the effect of reducing the discoloration of the polycarbonate resin by a tint characteristic of the composite tungsten oxide fine particle visually deteriorates and when the content is higher than 0.1 part by weight, visible light transmittance becomes very low.

(component C: ultraviolet absorbent)

The ultraviolet absorbent (component C) is an ultraviolet absorbent having a benzoxazine skeleton represented by the following formula (1). Examples of the component C include 2,2'-p-phenylenebis(3,1-benzoxazine-4-one) and 2,2'-m-phenylenebis(3,1-benzoxazine-4-one).

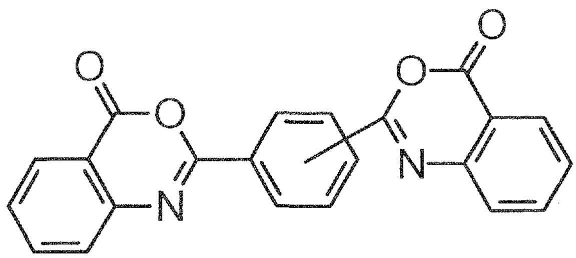

(1)

The content of the component C is 0.01 to 1 part by weight, preferably 0.07 to 0.7 part by weight, more preferably 0.1 to 0.5 part by weight based on 100 parts by weight of the component A. When the content of the component C is lower than 0.01 part by weight, the weather resistance of the resin composition degrades and when the content is higher than 1 part by weight, molding stability and mechanical properties deteriorate.

(component D: heat stabilizer)

The resin composition of the present invention preferably contains a heat stabilizer (component D) in an amount of 0.0001 to 1 part by weight based on 100 parts by weight of the polycarbonate resin (component A).

The heat stabilizer (component D) is selected from a phosphorus-based stabilizer (component D-1), a hindered phenol-based stabilizer (component D-2) and a sulfur-based stabilizer (component D-3). The content of the heat stabilizer (component D) is preferably 0.0001 to 1 part by weight, more preferably 0.001 to 0.5 part by weight, much more preferably 0.007 to 0.1 part by weight, particularly preferably 0.01 to 0.07 part by weight based on 100 parts by weight of the component A.

(component D-1: phosphorus-based stabilizer)

The phosphorus-based stabilizer (component D-1) is widely known as a heat stabilizer for polycarbonate resins. The phosphorus-based stabilizer enhances the heat stability of a resin composition to such an extent that it can withstand an extreme heat load. The phosphorus-based stabilizer is mainly selected from a phosphite compound and a phosphonite compound.

Examples of the phosphite compound include triphenyl phosphite, tris(nonylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-tert-butylphenyl)octyl phosphite, tris(diethylphenyl)phosphite, tris(di-iso-propylphenyl)phosphite, tris(di-n-butylphenyl)phosphite, tris(2,4-di-tert-butylphenyl)phosphite, tris(2,6-di-tert-butylphenyl)phosphite, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenylbisphenol A pentaerythritol diphosphite, bis(nonylphenyl)pentaerythritol diphosphite and dicyclohexyl pentaerythritol diphosphite.

Other phosphite compounds which react with a dihydric phenol and have a cyclic structure may also be used.

Examples of the compounds include 2,2'-methylenebis(4,6-di-tert-butylphenyl)(2,4-di-tert-butylphenyl)phosphite, 2,2'-methylenebis(4,6-di-tert-butylphenyl) (2-tert-butyl-4-methylphenyl)phosphite, 2,2'-methylenebis(4-methyl-6-tert-butylphenyl)(2-tert-butyl-4-methylphenyl)phosphite and 2,2'-ethylidenebis(4-methyl-6-tert-butylphenyl)(2-tert-butyl-4-methylphenhyl)phosphite.

Examples of the phosphonite compound include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite. Out of these, tetrakis(di-tert-butylphenyl)-biphenylene diphosphonites and bis(di-tert-butylphenyl)-phenyl-phenyl phosphonites are preferred, and tetrakis(2,4-di-tert-butylphenyl)-biphenylene diphosphonites and bis(2,4-di-tert-butylphenyl)-phenyl-phenyl phosphonites are more preferred. The phosphonites compound may be and is preferably used in combination with a phosphite compound having an aryl group substituted by two or more alkyl groups.

The content of the phosphorus-based stabilizer (component D-1) is preferably 0.0001 to 1 part by weight, more preferably 0.001 to 0.5 part by weight, much more preferably 0.007 to 0.1 part by weight, particularly preferably 0.01 to 0.07 part by weight based on 100 parts by weight of the component A.

(component D-2: hindered phenol-based stabilizer)

Examples of the hindered phenol-based stabilizer include α-tocopherol, butylhydroxytoluene, cinnapyl alcohol, vitamin E, n-octadecyl-β-(4'-hydroxy-3',5'-di-tert-butylphenyl) propionate, 2-tert-butyl-6-(3'-tert-butyl-5'-methyl-2'-hydroxybenzyl )-4-methylphenyl acrylate, 2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidene-bis(3-methyl-6-tert-butylphenol), triethylene glycol-N-bis-3-(3-tert-butyl-4-hydroxy-5-methylphenyl) propionate, 1,6-hexanediol-bis[3-(3,5-di-tert-butyl-4-hydroxyphenyl) propionate], bis[2-tert-butyl-4-methyl-6-(3-tert-butyl-5-methyl-2-hydroxybenzyl)phenyl]terephthalate, 3,9-bis{2-[3-(3-tert-butyl-4-hydroxy-5-methylphenyl) propionyloxy]-1,1-dimethylethyl}-2,4,8,10-tetraoxaspiro[ 5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate], 2,4-bis(n-octylthio)-6-(4-hydroxy-3',5'-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl] hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl) isocyanurate, 1,3,5-tris-2[3(3,5-di-tert-butyl-4-hydroxyphenyl) propionyloxy]ethyl isocyanurate and tetrakis[methylene-3-(3',5'-di-tert-butyl-4-hydroxyphenyl)propionate]methane. All of them are easily acquired. The above hindered phenol-based stabilizers may be used alone or in combination of two or more.

The content of the hindered phenol-based stabilizer (component D-2) is preferably 0.0002 to 0.8 part by weight, more preferably 0.0005 to 0.45 part by weight, much more preferably 0.002 to 0.25 part by weight, particularly preferably 0.005 to 0.15 part by weight based on 100 parts by weight of the component A.

(component D-3: sulfur-based stabilizer)

Examples of the sulfur-based stabilizer include dilauryl thiodipropionate, ditridecyl thiodipropionate, dimyristyl thiodipropionate, distearyl thiodipropionate, pentaerythritol-tetrakis(3-laurylthiopropionate), pentaerytmritol-tetralsis(3-dodecylthiopropionate), pentaerythritol-tetrakis(3-octadecylthiopropionate), pentaerythritol-tetrakis(3-myristylthiopropionate) and pentaerythritol-tetrakis(3-stearylthiopropionate). They may be used alone or in combination of two or more.

The content of the sulfur-based stabilizer (component D-3) is preferably 0.0001 to 1 part by weight, more preferably 0.001 to 0.5 part by weight, much more preferably 0.007 to 0. 1 part by weight, particularly preferably 0.01 to 0.07 part by weight based on 100 parts by weight of the component A.

(production of resin composition)

The production process of the resin composition of the present invention is not particularly limited. However,

the resin composition of the present invention is preferably manufactured by melt kneading together all the components.

Specific means of melt kneading include a Banbury mixer, a kneading roll and an extruder. Out of these, an extruder is preferred from the viewpoint of kneading efficiency, and a multi-screw kneader such as double-screw kneader is more preferred. A preferred example of the double-screw kneader is as follows. One, two or three screws may be used, and two screws having a wide molten resin carrying capacity and a wide shear kneading capacity may be preferably used. The ratio (L/D) of the length (L) to the diameter (D) of each of the screws in the double-screw extruder is preferably 20 to 45, more preferably 28 to 42. When L/D is large, homogeneous dispersion is easily attained and when L/D is too large, the decomposition of the resin readily occurs by thermal deterioration. The screw must have at least one, preferably one to three kneading zones, each composed of a kneading disk segment (or a kneading segment corresponding to this), so as to increase the kneading capacity. Further, an extruder having a vent from which water contained in the raw materials and a volatile gas generated from the molten kneaded resin can be removed may be preferably used. A vacuum pump is preferably installed to discharge the generated water or volatile gas to the outside of the extruder from the vent efficiently. A screen for removing foreign matter contained in the extruded raw material may be installed in a zone before the dice of the extruder to remove the foreign matter from the resin composition. Examples of the screen include a metal net, a screen changer and a sintered metal plate (such as a disk filter).

The method of supplying the component B, the component C and other additives (to be simply referred to "additives" in the following methods) into the extruder is not particularly limited but the following methods are given as typical examples thereof. (i) The additives are supplied into the extruder independently of the polycarbonate resin. (ii) The additives and the polycarbonate resin powder are pre-mixed together by means of a super mixer, and the resulting pre-mixture is supplied into the extruder. (iii) The additives and the polycarbonate resin are melt kneaded together in advance to prepare a master pellet.

In one example of the above method (ii), all the necessary raw materials are pre-mixed together and then the pre-mixture is supplied into the extruder. In another example, a master agent which contains the additives in a high concentration is prepared and supplied into the extruder independently or after it is pre-mixed with the remaining polycarbonate resin. The master agent may be in a powdery form or a compressed granular form obtained from the powder. Other pre-mixing means include a Nauter mixer, a twin-cylinder mixer, a Henschel mixer, a mechanochemical apparatus and an extrusion mixer. A high-speed stirring type mixer such as a super mixer is preferred. A still another pre-mixing method is that the polycarbonate resin and the additives are uniformly dispersed into a solvent to prepare a solution and then the solvent is removed from the solution.

The resin extruded from the double-screw extruder is cut into a pellet directly or formed into a strand which is then cut with a pelletizer to be pelletized. When it is necessary to reduce the influence of extraneous dust, the atmosphere surrounding the extruder is preferably made clean.

(molded article)

Various products can be generally manufactured by injection molding a pellet produced from the resin composition of the present invention obtained as described above. As for injection molding, not only ordinary molding methods but also injection molding methods such as injection compression molding, injection press molding, gas assist injection molding, foam molding (including what comprises the injection of a super-critical fluid), insert molding, in-mold coating molding, insulated runner molding, quick heat and cool molding, two-color molding, sandwich molding and super high-speed injection molding may be employed according to purpose to obtain molded articles. The advantages of these molding methods have already been widely known. Both cold-runner systems and hot-runner systems may be used.

Profile extrusion molded articles, sheets and films can be manufactured from the resin composition of the present invention by extrusion molding. For the molding of a sheet or a film, an inflation, calendering or casting process may also be used. Further, the resin composition may be molded into a heat shrinkable tube by carrying out specific stretching operation. The resin composition of the present invention can be formed into a molded article by rotational molding or blow molding as well. A molded article which has excellent transparency and designability while it has infrared shielding ability can be obtained by the above molding process.

Preferably, the molded article of the present invention has a visible light transmittance of 40 to 90 % and a Tts (Solar total transmittance) value of 70 % or less. More preferably, the visible light transmittance is 60 to 85 % and the Tts value is 70 % or less. Much more preferably, the visible light transmittance is 65 to 85 % and the Tts value is 70 % or less. When the visible light transmittance is lower than 40 %, visibility becomes worse and when the visible light transmittance is higher than 90 %, the molded article transmits most of the energy of the visible light region, thereby making it difficult to improve Tts. When. Tts is higher than 70 %, heat-ray shielding ability becomes unsatisfactory.

The molded article formed from the resin composition of the present invention may be further subjected to various surface treatments. The surface treatments as used herein include deposition (physical deposition, chemical deposition, etc.), plating (electroplating, electroless plating, hot dipping, etc.), painting, coating and printing, all of which are used to form a new layer on the surface layer of a resin molded article and are used for ordinary aromatic polycarbonate

resins. Specific examples of the surface treatments include hard coating, water-repellent and oil-repellent coating, ultraviolet light absorption coating, infrared light absorption coating and metallizing (typified by deposition). Hard coating is a particularly preferred and required surface treatment. Performance such as designability or weather resistance can be further provided to the molded article by carrying out this surface treatment.

The molded article of the present invention can be used as a window member for vehicles, especially a back door window, a sunroof or a roof panel. The molded article of the present invention can be used in a wide variety of fields such as window members for construction materials, lamp fittings for vehicles, glass windows for buildings, houses and greenhouses, roofs for garages and arcades, lenses for headlamps, lenses for signalers, lenses for optical equipment, mirrors, spectacles, goggles, sound deadening walls, windshields for bikes, face plates, solar cell covers or solar cell substrates, covers for displays, touch panels and parts (such as circuit covers, chasses, pachinko ball carrier guides) for play equipment (such as pachinko pinball machines) besides window members for vehicles owing to its characteristic features. Therefore, the molded article of the present invention is useful for various purposes such as electronic and electric equipment, OA equipment, car parts, mechanical parts, agricultural materials, fishing materials, shipping containers, play tools and miscellaneous goods.

## Examples

The following examples are provided to further illustrate the present invention. It is to be understood that the present invention is not limited by these examples. "Parts" means "parts by weight" and "%" means "wt%" unless otherwise stated.

(Examples 1 to 7 and Comparative Examples 1 to 6)

(1) Preparation of resin composition

(1-1) raw materials in use

(component A)

PC: polycarbonate resin powder having a molecular weight of 24,200 obtained by the following production process.

2,340 parts of ion exchange water, 947 parts of a 25 % sodium hydroxide aqueous solution and 0.7 part of hydrosulfite were fed to a reactor equipped with a thermometer, a stirrer and a reflux condenser, and 710 parts of bisphenol A was dissolved under agitation (bisphenol A solution). Thereafter, 2,299 parts of methylene chloride and 112 parts of a 48.5 % sodium hydroxide aqueous solution were added to the bisphenol A solution, and 354 parts of phosgene was blown into the reactor at 15 to 25°C for about 90 minutes to carry out a phosgenation reaction. After the end of phosgenation, 13 parts of a 11 % methylene chloride solution of p-tert-butylphenol and 88 parts of a 48.5 % sodium hydroxide aqueous solution were added, stirring was suspended, the resulting mixture solution was left for 10 minutes and separated, stirring was carried to emulsify the solution, and after five minutes, the obtained emulsion was treated by passing a homomixer (manufactured by Tokushu Kika Kogyo Co., Ltd.) 35 times at a revolution of 1,200 rpm to obtain a highly emulsified dope. This highly emulsified dope was reacted in a polymerization tank (having a stirrer) at a temperature of 35°C for 3 hours under no agitation to complete polymerization.

After the end of the reaction, 5, 728 parts of methylene chloride was added to dilute the reaction mixture, a methylene chloride phase was separated from the reaction mixture, 5,000 parts of ion exchange water was added to and mixed with the separated methylene chloride phase under agitation, stirring was suspended, and a water phase and an organic phase were separated from each other. Then, rinsing was repeated until the electric conductivity of the water phase became almost equal to that of ion exchange water so as to obtain a purified polycarbonate resin solution. Then, methylene chloride was evaporated from the purified polycarbonate resin solution at a liquid temperature of 75°C in a 1,000-liter kneader filled with 100 liters of ion exchange water to obtain a powder-particle product. 25 parts of the powder-particle product and 75 parts of water were injected into a hot-water treating tank equipped with a stirrer and mixed together at a water temperature of 95°C for 30 minutes under agitation. Thereafter, the obtained mixture of the powder-particle product and water was separated by a centrifugal machine to obtain a powder-particle product containing 0.5 wt% of methylene chloride and 45 wt% of water. This powder-particle product was continuously supplied into a conductive heat receiving groove type double-screw stirring continuous drier made of SUS316L controlled at 140°C at a rate of 50 kg/hr (in terms of polycarbonate resin) to be dried for an average drying time of 3 hours so as to obtain a polycarbonate resin powder-particle product having a branched structure.

(component B)

B: infrared shielding agent comprising about 23 % of $Cs_{0.33}WO_3$ (average particle diameter of 5 nm) and an organic dispersed resin (YMDS-874 of Sumitomo Metal Mining Co., Ltd.)

(component C)

C-1: benzoxazine-based ultraviolet absorbent (UV-BO of Kinkai Kagaku Co., Ltd., 2,2'-p-phenylenebis(3,1-benzoxazin-4-one))
C-2: benzoxazine-based ultraviolet absorbent (UV-3638 of EUTEC CHEMICALS Co., Ltd., 2,2'-p-phenylenebis(3,1-benzoxazin-4-one)) C-3 (for comparison): benzotriazole-based ultraviolet absorbent (Tinuvin 234 of Ciba Specialty Chemicals Co. , Ltd.) C-4 (for comparison): triazine-based ultraviolet absorbent CGX-006 (Tinuvin 1577 of Ciba Specialty Chemicals Co. , Ltd.)

(component D)

D-1: phosphorus-based stabilizer (P-EPQ of Clariant Japan Co., Ltd., a mixture of allyl phosphonite and allyl phosphite)
D-2: hindered phenol-based stabilizer (Irganox 1076 of Ciba Specialty Chemicals Co., Ltd., octadecyl 3,5-bis(1,1-dimethylethyl)-4-hydroxybenzenepropoinate)
D-3: sulfur-based stabilizer (AO412S of Adeka Corporation, pentaerythritol tetralauryl thiopropionate)

(others)

VP: fatty acid full ester (VPG861 of Cognis Japan Co., Ltd., higher fatty acid pentaerythritol ester)
SA: fatty acid partial ester (Rikemal S-100A of Riken Vitamin Co., Ltd., glycerin fatty acid ester)

(2) Preparation of test sample

(2-1) production of resin composition (in the following description, the above symbols for raw materials are used)

Components shown in Tables 1 and 2 were weighed, mixed together by means of a blender in a ratio shown in Table 1 and Table 2 and melt kneaded together by means of a vented double-screw extruder to obtain a resin composition pellet. As for the content of the component B, the numerals within the parentheses indicate the content of $Cs_{0.33}WO_3$ which is an inorganic ultraviolet absorbent material contained in B (the numerals beside the parentheses indicate the content of B in the resin composition). A pre-mixture of the additives and PC in a weight ratio of 1:10 to 1:100 was prepared and wholly mixed by means of a blender. The TEX30$\alpha$ vented double-screw extruder (complete interlocking, same-direction rotation, double screws) of The Japan Steel Works, Ltd. was used. The extruder has one kneading zone before the vent port. Extrusion conditions include a delivery rate of 20 kg/h, a screw revolution of 130 rpm, a vent vacuum degree of 3 kPa and an extrusion temperature from the first feed port to the dice portion of 280°C. The production of the above resin composition was carried out in an atmosphere where clean air passing through an HEPA filter was circulated, and extra care was taken to prevent the inclusion of foreign matter during operation.

(2-2) molded article production method

After the obtained pellet was dried at 110 to 120°C for 6 hours by means of a hot air circulation drier, it was molded at a cylinder temperature of 300°C and a mold temperature of 80°C by means of an injection molding machine [SG260M-HP of Sumitomo Heavy Industries, Ltd.] to form a 5 mm-thick plate as a test sample for evaluation.

(3) Evaluation items

(3-1) visible light transmittance (Tv)

A 50 mm-square test sample was cut out from the molded plate. Its spectral light was calculated by means of the spectrophotometer U-4100 of Hitachi High Technologies Co., Ltd. in accordance with JIS R 3106. The results are shown in Tables 1 and 2.

(3-2) Solar total transmittance (Tts)

A 50 mm square test sample was cut out from the molded plate. Its spectral light was calculated by means of the spectrophotometer U-4100 of Hitachi High Technologies Co., Ltd. in accordance with ISO13837. The results are shown in Tables 1 and 2.

(3-3) initial hue (YI value)

A 50 mm square test sample was cut out from the molded plate. The YI value (Yellow Index) of the test sample was measured by means of the TC-1800MKII of Tokyo Denshoku Co., Ltd. in accordance with the method specified in JISK 7105.

(3-4) hue change before and after weather resistance test (ΔYI)

A 50 mm square test sample was cut out from the molded plate. The YI value (Yellow Index) of the test sample was measured by means of the TC-1800MKII of Tokyo Denshoku Co., Ltd. in accordance with the method specified in JISK 7105. A xenon ultraviolet exposure test was made on the test sample for 1,000 hours (UV irradiation intensity of 90 $W/m^2$, black panel temperature of 63°C), and then the YI value of the test sample was measured in the same manner as above to obtain its hue change (ΔYI) before and after the test. The results are shown in Tables 1 and 2.

(3-5) molding stability

After the pellet obtained in 2-1 was dried at 110 to 120°C for 6 hours by means of a hot air circulation drier, it was molded at a cylinder temperature of 300°C and a mold temperature of 80°C by means of an injection molding machine [SG260M-HP of Sumitomo Heavy Industries, Ltd.] to form a molded article measuring 150 mm x 150 mm and having a thickness of 5 mm. After 20 molded articles were taken out, the nozzle of the molding machine was removed from the mold and the mold was retained in the machine for 30 minutes to produce a heat history. Thereafter, a molded article was formed under the same conditions as above and taken out to check its appearance. When the molded article has no silver streak in the appearance visually, it is evaluated as ○ and when it has an apparent silver streak in the appearance, it is evaluated as X. The results are shown in Tables 1 and 2.

(4) Evaluations of molded article in various applications

Window members for vehicles, lamp fittings for vehicles and window members for construction materials were formed from the compositions of the examples, the above evaluations (3) were made on these, and it was confirmed that good results were obtained. When the obtained molded articles were hard coated, it was confirmed that a good hard coat layer was obtained.

Table 1

| | | | Unit | Example 1 | Example 2 | Example 3 | Example 4 | Example 5 | Example 6 | Example 7 |
|---|---|---|---|---|---|---|---|---|---|---|
| Composition | Component A | PC | Parts weight | 100 | 100 | 100 | 100 | 100 | 100 | 100 |
| | Component B | B | Parts by weight | 0.07 (0.016) | 0.01 (0.0023) | 0.30 (0.069) | 0.07 (0.016) | 0.07 (0.016) | 0.07 (0.016) | 0.07 (0.016) |
| | Component C | C-1 | Parts by weight | 0.30 | 0.30 | 0.30 | 0.05 | 1.00 | | 0.30 |
| | | C-2 | | | | | | | 0.3 | |
| | | C-3 | | | | | | | | |
| | | C-4 | | | | | | | | |
| | Component D | D-1 | Parts by weight | 0.03 | 0.03 | 0.03 | 0.03 | 0.03 | 0.03 | 0.03 |
| | | D-2 | | 0.05 | 0.05 | 0.05 | 0.05 | 0.05 | 0.05 | |
| | | D-3 | | | | | | | | 0.05 |
| | Others | VP | Parts by weight | 0.1 | 0.1 | 0.1 | 0.1 | 0.1 | 0.1 | 0.1 |
| | | SA | Parts by weight | 0.02 | 0.02 | 0.02 | 0.02 | 0.02 | 0.02 | 0.02 |
| Evaluation of molded article | Tv | | % | 76 | 86 | 45 | 76 | 75 | 76 | 76 |
| | Tts | | % | 57 | 67 | 40 | 57 | 57 | 57 | 57 |
| | Initial hue (YI) | | | 0.47 | 1.32 | -1.7 | 1.16 | 1.93 | 1.63 | 0.65 |
| | Weather resistance (ΔYI) | | | 0.97 | 0.31 | 2.13 | 1. 67 | 0.67 | 0.89 | 0.99 |
| | Having appearance of silver streak bv moulding | | | ○ | ○ | ○ | ○ | ○ | ○ | ○ |

Table 2

| | | | Unit | C.Ex. 1 | C.Ex. 2 | C.Ex. 3 | C.Ex. 4 | C.Ex. 5 | C.Ex. 6 |
|---|---|---|---|---|---|---|---|---|---|
| Composition | Component A | PC | Parts by weight | 100 | 100 | 100 | 100 | 100 | 100 |
| | Component B | B | Parts by weight | 0.07 (0.016) | | 1.00 (0.23) | 0.07 (0.016) | 0.07 (0.016) | 0.07 (0.016) |
| | Component C | C-1 | Parts by weight | | 0.30 | 0.30 | 2.00 | | |
| | | C-2 | | | | | | | |
| | | C-3 | | | | | | 0.3 | |
| | | C-4 | | | | | | | 0.3 |
| | Component D | D-1 | Parts by weight | 0.03 | 0.03 | 0.03 | 0.03 | 0.03 | 0.03 |
| | | D-2 | | 0.05 | 0.05 | 0.05 | 0.05 | 0.05 | 0.05 |
| | | D-3 | | | | | | | |
| | Others | VP | Parts by weight | 0.10 | 0.10 | 0.10 | 0.10 | 0.10 | 0.10 |
| | | SA | Parts by weight | 0.02 | 0.02 | 0.02 | 0.02 | 0.02 | 0.02 |
| Evaluation of molded article | Tv | | % | 76 | 89 | 8 | 75 | 75 | 75 |
| | Tts | | % | 57 | 83 | 29 | 57 | 57 | 57 |
| | Initial hue(YI) | | | 0.11 | 1.54 | -8.91 | 3.87 | 8.23 | 7.01 |
| | Weather resistance (ΔYI) | | | 7.97 | 0.12 | 5.79 | 0.51 | 0.94 | 0.82 |
| | Having appearance of silver streak by molding | | | ○ | ○ | ○ | × | ○ | ○ |
| C.Ex.: Comparative Example | | | | | | | | | |

Effect of the Invention

As obvious from Examples, according to the present invention, it is understood that a molded article which has a small YI value and can be tinted in various colors is obtained by using an ultraviolet absorbent (component C) having a benzoxazine skeleton. It is also understood that when a composite tungsten oxide fine particle (component B) and a specific ultraviolet absorbent (component C) are added to a polycarbonate resin (component A), a resin composition which has both visible light transmission and infrared shielding performance as well as low cloudiness and excellent environmental characteristics and a molded article thereof are obtained.

That is, the resin composition of the present invention is excellent in infrared shielding performance and visible light transmission and has low cloudiness and can contribute to the reduction of an environmental burden. The resin composition of the present invention has a good hue and can be tinted in various colors.

Industrial Feasibility

The resin composition of the present invention is useful for various purposes such as window members for vehicles, lamp fittings for vehicles and window members for construction materials.

## Claims

1. A resin composition comprising:

    (A) 100 parts by weight of a polycarbonate resin (component A);
    (B) 0.001 to 0.1 part by weight of an inorganic infrared shielding material (component B); and
    (C) 0.01 to 1 part by weight of an ultraviolet absorbent represented by the following formula (1) (component C),

    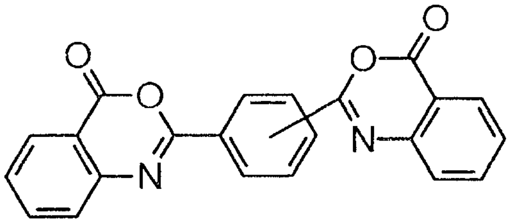

    (1)

    wherein the component B is a composite tungsten oxide particle represented by the formula MxWyOz (M is an element selected from H, He, alkali metal, alkali earth metal, rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, and x, y and z are numerals which satisfy $0.01 \leqq x \leqq 1$, $0.001 \leqq x/y \leqq 1$, and $2.2 \leqq z/y \leqq 3.0$), and
    wherein the particle diameter of the component B is 1 to 800 nm.

2. The resin composition according to claim 1, wherein M is an element selected from the group consisting of Li, Na, K, Rb, Cs, Mg, Ca, Sr and Ba.

3. The resin composition according to claim 1 or 2, wherein the composite tungsten oxide particle is coated with a dispersant.

4. The resin composition according to any one of claims 1 to 3 which comprises a heat stabilizer (component D) in an amount of 0.0001 to 1 part by weight based on 100 parts by weight of the polycarbonate resin (component A).

5. The resin composition according to claim 4, wherein the heat stabilizer (component D) is at least one heat stabilizer selected from the group consisting of a phosphorus-based stabilizer (component D-1), a hindered phenol-based stabilizer (component D-2) and a sulfur-based stabilizer (component D-3).

6. A molded article formed from the resin composition of any one of claims 1 to 5.

7. The molded article according to claim 6 which has a visible light transmittance of 40 to 90 % and a Tts (Solar total transmittance) value of 70 % or less,
    wherein the visible light transmittance is measured in accordance with JIS R 3106 on a 5 mm-thick plate, and wherein the Tts (Solar total transmittance) value is measured in accordance with ISO13837 on a 5 mm-thick plate.

8. The molded article according to claim 6 or 7 whose surface is hard coated.

9. The molded article according to any one of claims 6 to 8 which is a window member for vehicles, a lamp fitting for vehicles or a window member for construction materials.

## Patentansprüche

1. Harzzusammensetzung enthaltend:

    (A) 100 Gewichtsteile eines Polycarbonatharzes (Komponente A);
    (B) 0,001 bis 0,1 Gewichtsteile eines anorganischen Infrarot-abschirmenden Materials (Komponente B) und
    (C) 0,01 bis 1 Gewichtsteile eines UV-Absorptionsmittels, dargestellt durch die folgende Formel (1), (Komponente C),

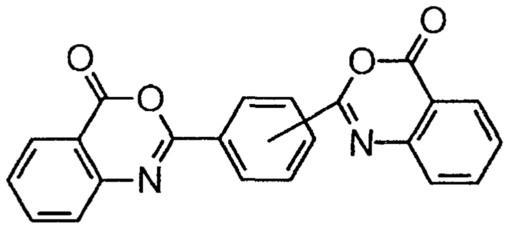

(1)

wobei die Komponente B ein Verbundwolframoxidteilchen ist, dargestellt durch die Formel MxWyOz (M ist ein Element ausgewählt aus H, He, Alkalimetall, Erdalkalimetall, Seltenerdelement, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi und I, und x, y und z sind Zahlen die $0{,}01 \leqq x \leqq 1$, $0{,}001 \leqq x/y \leqq 1$ und $2{,}2 \leqq z/y \leqq 3{,}0$ genügen), und
wobei der Teilchendurchmesser der Komponente B 1 bis 800 nm ist.

2. Harzzusammensetzung gemäß Anspruch 1, wobei M ein Element ist, ausgewählt aus der Gruppe, bestehend aus Li, Na, K, Rb, Cs, Mg, Ca, Sr und Ba.

3. Harzzusammensetzung gemäß Anspruch 1 oder 2, wobei das Verbundwolframoxidteilchen mit einem Dispersionsmittel beschichtet ist.

4. Harzzusammensetzung gemäß einem der Ansprüche 1 bis 3, die einen Wärmestabilisator (Komponente D) in einer Menge von 0,0001 bis 1 Gewichtsteile bezogen auf 100 Gewichtsteile des Polycarbonatharzes (Komponente A) enthält.

5. Harzzusammensetzung gemäß Anspruch 4, wobei der Wärmestabilisator (Komponente B) mindestens ein Wärmestabilisator ist, ausgewählt aus der Gruppe, bestehend aus einem Phosphorbasierten Stabilisator (Komponente D-1), einem gehinderten Phenol-basierten Stabilisator (Komponente D-2) und einem Schwefel-basierten Stabilisator (Komponente D-3).

6. Geformter Gegenstand gebildet aus der Harzzusammensetzung gemäß einem der Ansprüche 1 bis 5.

7. Geformter Gegenstand gemäß Anspruch 6, der eine Durchlässigkeit für sichtbares Licht von 40 bis 90% hat und einen Tts (solare Gesamtdurchlässigkeit)-Wert von 70% oder weniger hat,
wobei die Durchlässigkeit für sichtbares Licht gemäß JIS R 3106 an einer 5 mm dicken Platte gemessen wird, und wobei der Tts (solare Gesamtdurchlässigkeit)-Wert gemäß ISO13837 an einer 5 mm dicken Platte gemessen wird.

8. Geformter Gegenstand gemäß Anspruch 6 oder 7, wobei die Oberfläche hart beschichtet ist.

9. Geformter Gegenstand gemäß einem der Ansprüche 6 bis 8, welcher ein Fensterelement für Fahrzeuge, eine Lampenfassung für Fahrzeuge oder ein Fensterelement für Baumaterialien ist.

## Revendications

1. Composition de résine comprenant :

(A) 100 parties en poids d'une résine polycarbonate (composant A) ;
(B) de 0,001 à 0,1 partie en poids d'un matériau inorganique de protection contre les rayonnements infrarouges (composant B) ; et
(C) de 0,01 à 1 partie en poids d'un agent absorbant les rayonnements ultraviolets représenté par la formule (1) suivante (composant C),

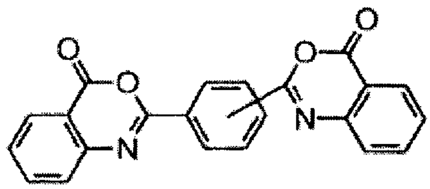

(1)

dans laquelle le composant B est une particule d'oxyde de tungstène composite représentée par la formule MxWyOz (M représente un élément choisi parmi H, He, un métal alcalin, un métal alcalino-terreux, une terre rare, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi et I, et x, y et z représentent des nombres qui satisfont $0,01 \leq x \leq 1$, $0,001 \leq x/y \leq 1$ et $2,2 \leq z/y \leq 3,0$), et
dans laquelle le diamètre des particules du composant B est de 1 à 800 nm.

2. Composition de résine selon la revendication 1, dans laquelle M est un élément choisi dans le groupe constitué de Li, Na, K, Rb, Cs, Mg, Ca, Sr et Ba.

3. Composition de résine selon la revendication 1 ou 2, dans laquelle la particule d'oxyde de tungstène composite est revêtue d'un dispersant.

4. Composition de résine selon l'une quelconque des revendications 1 à 3 qui comprend un stabilisant thermique (composant D) en une quantité de 0,0001 à 1 partie en poids sur la base de 100 parties en poids de la résine polycarbonate (composant A).

5. Composition de résine selon la revendication 4, dans laquelle le stabilisant thermique (composant D) est au moins un stabilisant thermique choisi dans le groupe constitué d'un stabilisant à base de phosphore (composant D-1), d'un stabilisant à base de phénol encombré (composant D-2) et d'un stabilisant à base de soufre(composant D-3).

6. Article moulé fabriqué à partir de la composition de résine selon l'une quelconque des revendications 1 à 5.

7. Article moulé selon la revendication 6 qui présente une transmittance de la lumière visible de 40 à 90 % et une valeur Tts (transmittance solaire totale) inférieure ou égale à 70 %, dans lequel la transmittance de la lumière visible est mesurée conformément à la norme JIS R 3106 sur une plaque de 5 mm d'épaisseur, et
dans lequel la valeur Tts (transmittance solaire totale) est mesurée conformément à la norme ISO13837 sur une plaque de 5 mm d'épaisseur.

8. Article moulé selon la revendication 6 ou 7 dont la surface est revêtue d'une couche dure.

9. Article moulé selon l'une quelconque des revendications 6 à 8 qui est un élément de vitre pour véhicules, une douille de lampe pour véhicules ou un élément de fenêtre pour matériaux de construction.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2779288 B
- JP 2009505871 A
- JP 4182357 B